(19) Europäisches Patentamt
European Patent Office
Office européen des brevets

(11) **EP 2 355 377 A1**

(12) **EUROPEAN PATENT APPLICATION**

(43) Date of publication:
**10.08.2011 Bulletin 2011/32**

(51) Int Cl.:
*H04B 10/155* (2006.01)     *G02F 1/225* (2006.01)
*G02F 3/00* (2006.01)     *G02F 1/35* (2006.01)

(21) Application number: **11152365.0**

(22) Date of filing: **27.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **02.02.2010 JP 2010021179**

(71) Applicant: **Fujitsu Limited
Kawasaki-shi, Kanagawa 211-8588 (JP)**

(72) Inventor: **Futami, Fumio
Kanagawa 211-8588 (JP)**

(74) Representative: **HOFFMANN EITLE
Patent- und Rechtsanwälte
Arabellastraße 4
81925 München (DE)**

(54) **Optical modulation device and optical modulation method**

(57)     In an optical modulation device, an inverter inverts power of a modulation signal light and generates the inverted modulation signal light. A first nonlinear medium phase-modulates a modulated light by a nonlinear optical effect of the modulation signal light. A second nonlinear medium phase-modulates the modulated light by the nonlinear optical effect of the inverted modulation signal light. An optical interference part controls interference between output light from the first nonlinear medium and that from the second nonlinear medium, and produces the phase-modulated modulated light.

FIG. 1

EP 2 355 377 A1

## Description

FIELD

The embodiment discussed herein is related to optical modulation devices and optical modulation methods for performing optical phase modulation.

BACKGROUND

In recent years, an information volume flowing through a network has been exponentially increasing with an expansion of a multimedia service using the Internet. In the above-described conditions, for the purpose of transmitting high-speed and large-capacity information at a low cost to a long distance, the construction of an optical communication network has been advanced. Further, as a communication method of the optical communication network, an optical phase modulation system excellent at a long-distance transmission is taken notice of.

The optical phase modulation system is a system for changing (modulating) a phase of light and superimposing information. As a typical device, an optical modulator using a Mach-Zehnder interferometer is included.

In the above-described optical modulator, a Mach-Zehnder interferometer formed by an optical waveguide is provided on a crystal substrate using lithium niobate ($LiNbO_3$: also, described as LN) as a ferroelectric medium. Further, an electric signal is applied to this optical waveguide and change in a refractive index of the optical waveguide is used, thereby performing phase modulation of light propagating through the optical waveguide.

On the other hand, there is used an optical direct phase modulation system which directly uses an optical signal without using an electric signal and performs optical phase modulation. In the above-described system, data signal light is supplied to a nonlinear medium and a change in the refractive index is caused by a nonlinear optical effect (Cross Phase Modulation (XPM)) depending on power of the data signal light, thereby modulating a phase.

The nonlinear optical effect means a phenomenon in which when light with relatively strong power is allowed to propagate through glass, physical properties (refractive index) of glass change according to light intensity and the linearity is lost in an optical response.

As a conventional technique of optical modulation, there is proposed an optical modulator using a spatial interference system in which optical space parallel light is transmitted inside in place of an optical fiber loop interferometer (Japanese Laid-open Patent Publication No. 11-194375). Further, there is proposed a technique in which a change in a refractive index caused by saturation of absorption of an Electro-absorption optical modulator is used and a modulated light is controlled through a configuration of an interferometer (Japanese Laid-open Patent Publication No. 2001-264712).

As the optical phase modulation system, when the above-described optical modulator (hereinafter, referred to as an LN optical modulator) having installed therein a Mach-Zehnder interferometer on an LN crystal substrate is used, a differential modulation is performed on a parallel optical waveguide having installed thereon a Mach-Zehnder interferometer, thereby performing optical phase modulation in which frequency chirp is prevented from occurring.

However, there is the following problem. That is, the LN optical modulator has a configuration in which a refractive index of an optical waveguide is changed by an electric signal and the optical phase modulation is performed, and therefore, is restricted to an operation speed in an electric circuit generating an electric signal and high-speed optical modulation cannot be realized.

In a trunk optical network, a migration from a 10 Gbit/s band to 40 Gbit/s band starts and further, development of several hundred Gbit/s band is performed. For the purpose of realizing the above-described ultra-high-speed and large-capacity system, an optical modulator needs to be driven at a high speed.

However, in the LN optical modulator, since a band limitation (speed limitation) is applied to an electric signal for driving an optical modulator, a modulation speed is limited and as a result, an ultra-high-speed operation of several hundred Gbit/s cannot be realized.

On the other hand, the above-described optical direct phase modulation system has a configuration in which the entire optical phase modulation that a refractive index is changed in a nonlinear medium by the nonlinear optical effect depending on power of the data signal light is performed.

Therefore, the optical direct phase modulation system is not limited to a response speed of an electric circuit differently from the LN optical modulator. When a nonlinear medium and ultra-high-speed data signal light for making a response at ultra-high speed are prepared, an operation of Tbit/s (terabit) class can be realized in addition to that of several hundred Gbit/s.

However, the optical direct phase modulation system has the problem that the frequency chirp occurs. In general, since a waveform of high-speed data signal light is not rectangular, a refractive index change amount generated proportionally to power of data signal light fluctuates, and fails to become a fixed value.

As a result, the phase modulation amount generated in the nonlinear medium also fails to become a fixed value, and therefore the frequency chirp occurs in the signal light after the phase modulation. There is a defect that when the frequency chirp occurs, a band is needlessly broadened and spectral efficiency is worsened, thereby deteriorating a transmission characteristic.

As can be seen from the above sequence, the optical modulation device cannot conventionally realize high-quality optical phase modulation without allowing the frequency chirp to occur in the speed faster than a response speed of an electric circuit.

SUMMARY

In view of the foregoing, it is one object of the present invention to provide an optical modulation device which operates at a high response speed and performs high-quality optical phase modulation and in which degradation in a transmission characteristic is suppressed.

Further, it is another object of the present invention to provide an optical modulation method for operating at a high response speed and performing high-quality optical phase modulation and in which degradation in a transmission characteristic is suppressed.

According to one aspect of the present invention, an optical modulation device includes: an inverter which inverts power of a modulation signal light and generates the inverted modulation signal light; a first nonlinear medium which phase-modulates a modulated light by a nonlinear optical effect of the modulation signal light; a second nonlinear medium which phase-modulates the modulated light by the nonlinear optical effect of the inverted modulation signal light; and an optical interference part which controls interference between output light from the first nonlinear medium and that from the second nonlinear medium.

BRIEF DESCRIPTION OF DRAWINGS

FIG. 1 illustrates a configuration example of an optical modulation device;
FIG. 2 illustrates a configuration example of an LN optical modulator;
FIGS. 3A and 3B illustrate a phase transition state of propagation light on a parallel optical waveguide;
FIG. 4 illustrates a phase transition state of output light from the LN optical modulator;
FIG. 5 describes a reason that frequency chirp occurs in an optical direct phase modulation system;
FIG. 6 illustrates a configuration example of the optical modulation device;
FIGS. 7A to 7C illustrate a power or phase state of each signal light;
FIGS. 8A to 8D illustrate a power or phase state of each signal light;
FIG. 9 illustrates a phase transition state in each route point of the optical modulation device;
FIG. 10 illustrates a phase transition state of output light from the optical modulation device;
FIG. 11 illustrates a configuration example of an inverter;
FIG. 12 illustrates input-output characteristics of the inverter;
FIG. 13 illustrates a configuration example of the inverter;

FIG. 14 illustrates a configuration example of the optical modulation device;
FIG. 15 illustrates a configuration example of the optical modulation device;
FIG. 16 illustrates a configuration example of the optical modulation device;
FIG. 17 illustrates a configuration example of the optical modulation device;
FIGS. 18A to 18C illustrate a waveform example of each signal light;
FIG. 19 illustrates a configuration example of the optical modulation device;
FIGS. 20A to 20C illustrate a waveform example of each signal light;
FIGS. 21A and 21B illustrate a waveform example of each signal light;
FIG. 22 illustrates a configuration example of the optical modulation device;
FIG. 23 illustrates a configuration example of the optical modulation device; and
FIG. 24 illustrates a configuration example of the optical modulation device.

DESCRIPTION OF EMBODIMENTS

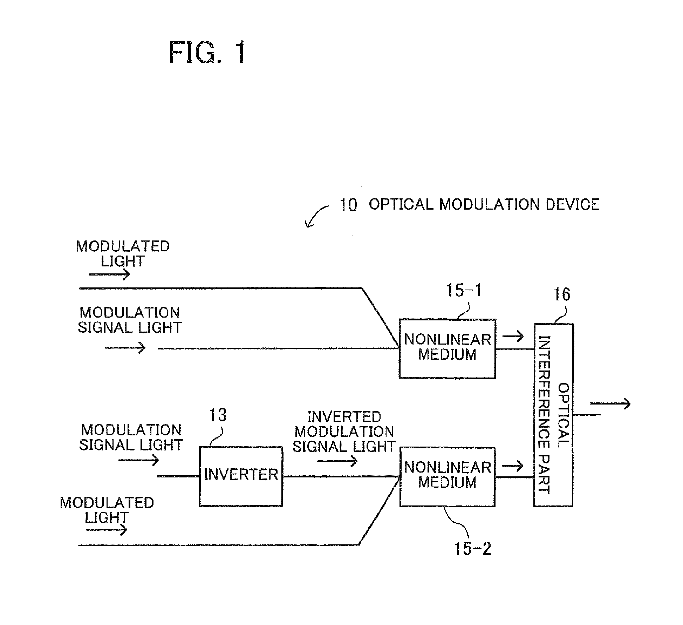

Preferred embodiments of the present invention will now be described in detail below with reference to the accompanying drawings, wherein like reference numerals refer to like elements throughout. FIG. 1 illustrates a configuration example of an optical modulation device. The optical modulation device 10 includes an inverter 13, a nonlinear medium 15-1 (first nonlinear medium), a nonlinear medium 15-2 (second nonlinear medium), and an optical interference part 16. The optical modulation device 10 is a device which performs the entire optical phase modulation without using an electric signal.

The inverter 13 inverts power of a modulation signal light, and generates the inverted modulation signal light. The nonlinear medium 15-1 performs phase modulation of a modulated light by a nonlinear optical effect of the modulation signal light. The nonlinear medium 15-2 performs phase modulation of the modulated light by the nonlinear optical effect of the inverted modulation signal light. The optical interference part 16 controls interference between output light from the nonlinear medium 15-1 and that from the nonlinear medium 15-2, and produces the phase-modulated modulated light.

Before a configuration and operation of the optical modulation device 10 will be described in detail below, one reason that frequency chirp is suppressed by an LN optical modulator and another reason that frequency chirp occurs by using an optical direct phase modulation method will be described.

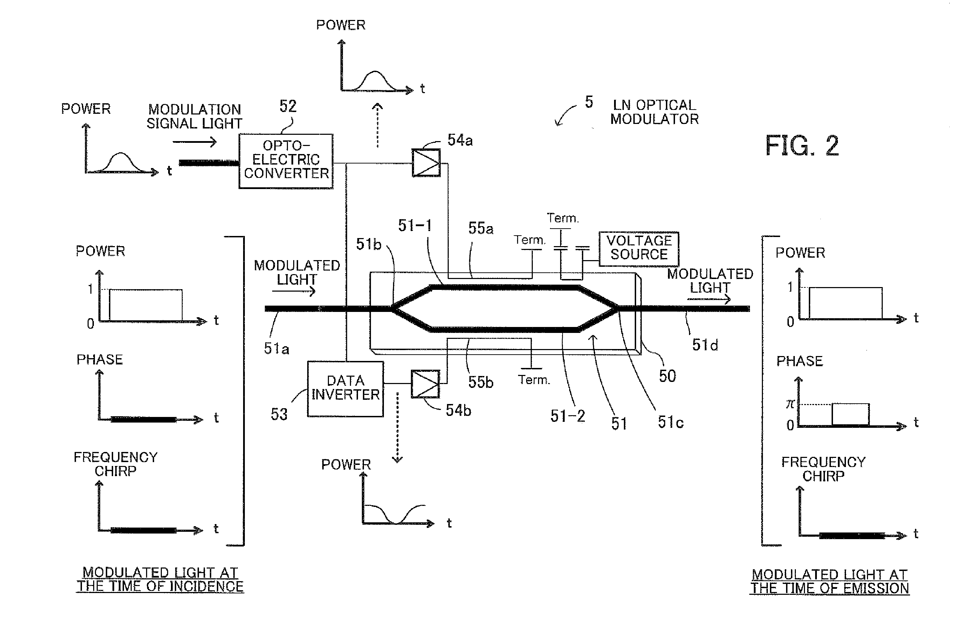

FIG. 2 illustrates a configuration example of the LN optical modulator. In the illustrated LN optical modulator 5, a Mach-Zehnder interferometer type optical waveguide 51 in which light is split into two lights to pass through different optical waveguides and then is multiplexed again is formed on a part of an LN crystal substrate 50.

The optical waveguide 51 has an incident optical waveguide 51a, a splitter 51b, two parallel optical waveguides 51-1 and 51-2, a multiplexing part 51c, and an outgoing optical waveguide 51d. Further, electrodes 55a and 55b are provided near the parallel optical waveguides 51-1 and 51-2, respectively.

An opto-electric converter 52, a data inverter 53, and amplifiers 54a and 54b are provided around the LN crystal substrate 50. The opto-electric converter 52 converts an input modulation signal light into an electric signal. The data inverter 53 inverts a data level of the electric signal. The amplifier 54a amplifies output signal from the opto-electric converter 52 and transmits the amplified output signal to the electrode 55a. On the other hand, the amplifier 54b amplifies output signal from the data inverter 53 and transmits the amplified output signal to the electrode 55b.

The modulated light modulated by a data string obtained by converting the modulation signal light into an electric signal enters the incident optical waveguide 51a of the optical waveguide 51, and is split into two lights by the splitter 51b, thereby flowing through the parallel optical waveguides 51-1 and 51-2.

Further, refractive indices of the parallel optical waveguides 51-1 and 51-2 change due to an electric field applied by the electrodes 55a and 55b, respectively. As a result, each phase of light propagating through the parallel optical waveguides 51-1 and 51-2 changes, and light is multiplexed by the multiplexing part 51c and the phase-modulated modulated light is produced from the outgoing optical waveguide 51d.

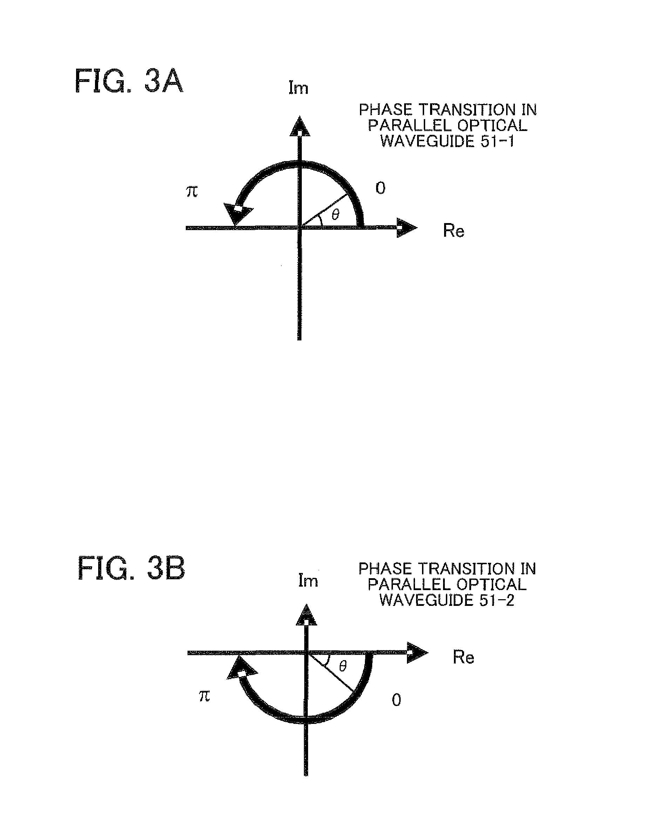

FIGS. 3A and 3B illustrate phase transition states of propagation light on the parallel optical waveguides 51-1 and 51-2, respectively. When a data level of the modulation signal light is equal to "1", the optical phase modulation amount is set to "π", and on the other hand, when a data level of the modulation signal light is equal to "0", the optical phase modulation amount is set to "0". FIG. 3A illustrates a phase transition from "0" to "π" of the propagation light on the parallel optical waveguide 51-1. FIG. 3B illustrates a phase transition from "0"' to "-π" of the propagation light on the parallel optical waveguide 51-2.

With respect to an optical phase modulation of the parallel optical waveguide 51-1, a phase modulation is caused by an electric field applied from the electrode 55a on the parallel optical waveguide 51-1, and as a result, the propagation light on the parallel optical waveguide 51-1 takes a binary phase of "0" and "π"

In this case, when transiting from "0" to "π" or from "π" to "0" on the parallel optical waveguide 51-1, propagation light transits with an angle (phase) of θ $(0 \leq \theta \leq \pi)$ in the transition time between "0" and "π".

That is, when the phase of the propagation light transits from "0" to "π", θ becomes equal to "π" temporally transiting an angle (phase) from "0" in the direction of "π" on the positive side between "0" and "π". On the other hand, when the phase of the propagation light transits from "π" to "0", θ becomes equal to "0" temporally transiting an angle (phase) from "π" in the direction of "0" on the positive side between "π" and "0".

Here, when the frequency chirp is represented by f, the phase is represented by φ, and the time is represented by t, the frequency chirp is given as the following formula (1).

[formula (1) ]

$$ f = \frac{\partial \varphi}{\partial t} \qquad \cdots (1) $$

The frequency chirp is obtained by differentiating the phase by the time as illustrated in formula (1), and therefore, when the phase varies in time, the frequency chirp occurs. Supposing that the optical phase modulation is performed by using only the parallel optical waveguide 51-1, since the propagation light on the parallel optical waveguide 51-1 takes a binary phase of "0" and "π", the optical phase modulation can be performed also by using only one parallel optical waveguide 51-1.

However, when the optical phase modulation is performed by using only the parallel optical waveguide 51-1, the time transits and the phase changes with the propagation light taking phases except for "0" and "π" as described above, and therefore, the frequency chirp occurs.

On the other hand, the LN optical modulator 5 modulates propagation light on the parallel optical waveguide 51-2 by using inverted data obtained by subjecting the modulation signal light to the photoelectric conversion. In the optical phase modulation of the parallel optical waveguide 51-2, the phase modulation is caused by an electric field applied from the electrode 55b in the parallel optical waveguide 51-2, and the propagation light on the parallel optical waveguide 51-2 takes a binary phase of "0" and "π".

In this case, when transiting of phase from "0" to "π" or from "π" to "0" on the parallel optical waveguide 51-2, the propagation light transits with an angle (phase) of θ $(-\pi \leq \theta \leq 0)$ in the transition time between "0" and "-π".

That is, when the phase of the propagation light transits from "0" to "-π" θ becomes equal to "-π" temporally transiting an angle (phase) from "0" in the direction of "-π" on the negative side between "0" and "-π". On the other hand, when the phase of the propagation light transits from "-π" to "0", θ becomes equal to "0" temporally transiting an angle (phase) from "-π" in the direction of "0" on the negative side between "-π" and "0".

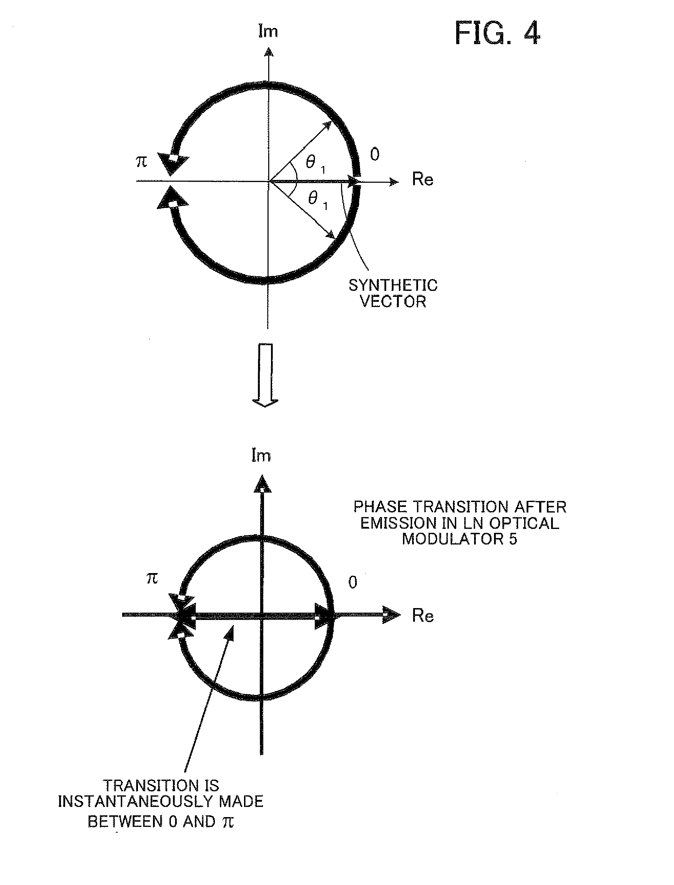

FIG. 4 illustrates the phase transition state of output light of the LN optical modulator 5. Both of the phase modulation amounts of the parallel optical waveguides 51-1 and 51-2 are the same with each other, but its signs are different from each other. Accordingly, for example, when transiting at an angle $(+\theta_1)$ on the parallel optical waveguide 51-1 side, the propagation light transits at an angle $(-\theta_1)$ on the parallel optical waveguide 51-2 side, and therefore, a synthetic vector of respective vectors is formed on the real axis.

That is, the synthetic vector of a light electric field between one phase of the propagation light which transits on the parallel optical waveguide 51-1 side and another phase of the propagation light which transits on the parallel optical waveguide 51-2 side is always formed on the real axis. Accordingly, since there is no time fluctuation of an angle (phase) between "0" and "π" (since the transition is made on the real axis, a vector has no angle), the transition is instantaneously made between "0" and "π", and the time fluctuation of the phase modulation amount is suppressed.

As can be seen from the above sequence, when the above-described differential modulation is performed in the LN optical modulator 5, the time fluctuation of the phase modulation amount is suppressed except for the moment when the phase of the propagation light transits from "0" to "π", conversely, from "π" to "0", and therefore, the frequency chirp can be prevented from occurring.

Note that in the LN optical modulator 5, the modulation speed is restricted based on the response speed of an electrooptical effect (to approximately 100 Gb/s). This permits an electronic circuit to become a bottleneck, and as a result, the optical phase modulation with a high bit rate fails to be performed. In addition, there is a disadvantage that since the conversion efficiency from an optical signal to an electric signal is low, the function for converting an optical signal to an electric signal is attended with large power dissipation.

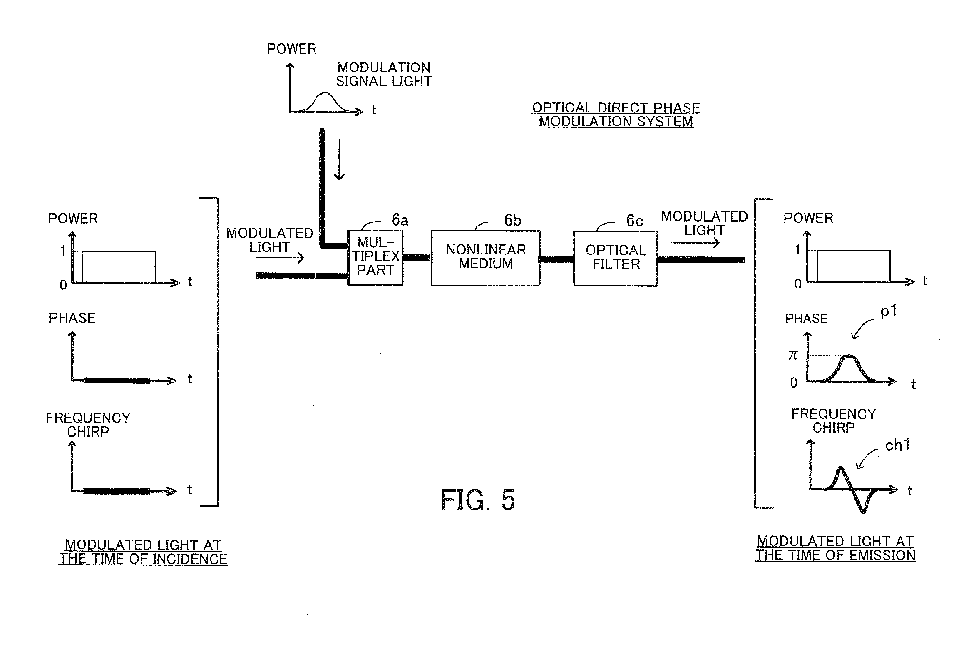

FIG. 5 describes a reason that the frequency chirp occurs in the optical direct phase modulation system. In the optical direct phase modulation system, both of the modulation signal light and the modulated light in which a polarization state is adjusted are first multiplexed by a multiplexing part 6a, and the multiplexed light enters a nonlinear medium 6b.

Then, the modulated light is phase-modulated in the nonlinear medium 6b and the modulation signal light is rejected by an optical filter 6c, thereby producing the modulated light after the phase modulation. Note that a wavelength of the modulation signal light and that of the modulated light are different from each other.

In the nonlinear medium 6b, a nonlinear optical effect referred to as an optical Kerr effect occurs and the modulated light is modulated by the phase amount proportional to power (amplitude) of the modulation signal light for output.

As can be seen from a phase state p1 of FIG. 5, the modulated light produced from the optical filter 6c has not a rectangular waveform but a waveform of a phase with a time fluctuation. Since the frequency chirp is given as time differential of a phase, when the phase of a waveform as illustrated in the phase state p1 is differentiated by the time, a frequency chirp ch1 occurs.

The optical direct phase modulation system has the following advantage. That is, the frequency chirp unavoidably occurs as described above. The nonlinear optical effect in the nonlinear medium 6b is extremely rapid and has an ultra-high-speed response characteristic of terabit class. Therefore, the optical phase modulation with a high bit rate can be performed.

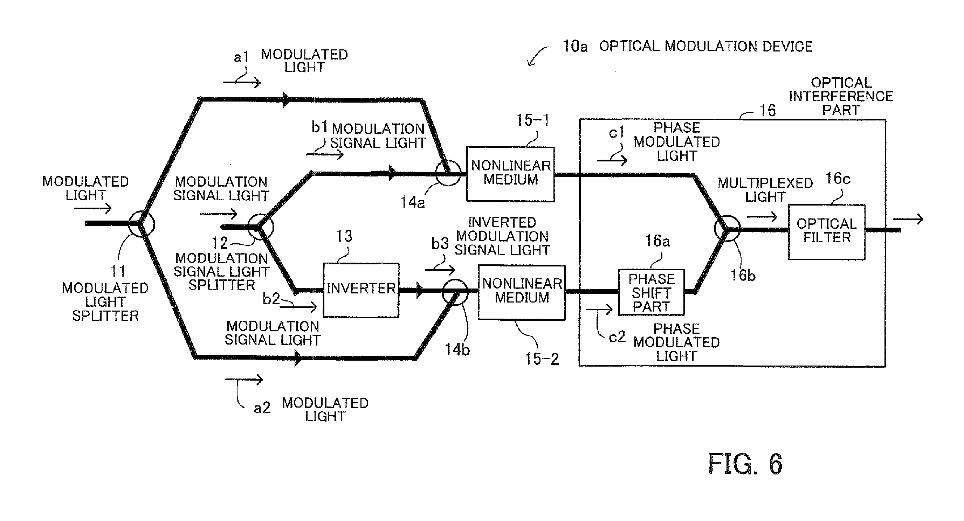

Subsequently, a configuration and operation of the optical modulation device 10 will be described in detail below. FIG. 6 illustrates a configuration example of the optical modulation device. The illustrated optical modulation device 10a includes a modulated light splitter 11, a modulation signal light splitter 12, an inverter 13, optical multiplexing parts 14a and 14b, nonlinear mediums 15-1 and 15-2, and an optical interference part 16. In addition, the optical interference part 16 includes a phase shift part 16a, an optical multiplexing part 16b, and an optical filter 16c.

The modulated light splitter 11 splits an input modulated light into two lights and outputs modulated lights a1 and a2. The modulation signal light splitter 12 splits an input modulation signal light into two lights and outputs modulation signal lights b1 and b2.

The inverter 13 inverts power of the modulation signal light b2 and generates an inverted modulation signal light b3. Note that one waveform λp of the modulated light and another waveform λs of the modulation signal light are different from each other (λp≠λs).

The optical multiplexing part 14a multiplexes the modulated light a1 and the modulation signal light b1, and supplies the multiplexed light to the nonlinear medium 15-1. The optical multiplexing part 14b multiplexes the modulated light a2 and the inverted modulation signal light b3, and supplies the multiplexed light to the nonlinear medium 15-2.

To the nonlinear medium 15-1, the modulated light a1 and the modulation signal light b1 are supplied. By the nonlinear optical effect (mainly, an action of XPM) of the modulation signal light b1, the nonlinear medium 15-1 modulates the modulated light a1 by the phase amount proportional to power of the modulation signal light b1, and outputs output light as a phase modulated light c1.

To the nonlinear medium 15-2, the modulated light a2 and the inverted modulation signal light b3 are supplied. By the nonlinear optical effect (mainly, an action of XPM) of the inverted modulation signal light b3, the nonlinear medium 15-2 modulates the modulated light a2 by the phase amount proportional to power of the inverted modulation signal light b3, and outputs output light as a phase modulated light c2.

As can be seen from the above sequence, to one nonlinear medium 15-1, the modulated light a1 and the modulation signal light b1 are supplied and the phase modulation is performed. To the other nonlinear medium 15-2, the modulated light a2 and the inverted modulation signal light b3 obtained by inverting the power of the modulation signal light b2 are supplied and the phase modulation is performed. In each of the nonlinear mediums 15-1 and 15-2, a phase of the modulated light is modulated independently from each other.

As the nonlinear mediums 15-1 and 15-2, for example, a highly nonlinear fiber (HNLF) in which generation efficiency of the nonlinear optical effect is high can be used. Or, without being limited to the HNLF, there may be used a photonic crystal fiber, a semiconductor optical amplifier, a waveguide with a Quasi-Phase-Matching structure (PPLN: periodically poled lithium niobate), and a silicon optical waveguide.

Note that the phase modulation amount is generally proportional to the product of a nonlinear coefficient and medium length of a nonlinear medium, and power of a modulation signal light. In addition, the power of the modulation signal light b1 and that of the inverted modulation signal light b3 are adjusted such that the phase modulation amounts generated in the nonlinear mediums 15-1 and 15-2 are approximately equal to "π".

On the other hand, the optical interference part 16 causes the phase shift part 16a to bias the modulated light on the nonlinear medium 15-2 side route and shift, by n (or, -n), the phase modulation amount of a phase of the phase modulated light c2 such that a phase difference between two modulated lights on the routes is equal to "0" with respect to one route (route on the nonlinear medium 15-1 side) in which the modulated light phase-modulated by the modulation signal light b1 is generated and another route (route on the nonlinear medium 15-2 side) in which the modulated light phase-modulated by the inverted modulation signal light b3 is generated.

The optical multiplexing part 16b multiplexes the phase modulated light c1 and the phase modulated light c2 after the phase shift. As a result, the modulated lights a1 and a2 subjected to the phase modulation in the nonlinear mediums 15-1 and 15-2, respectively, are multiplexed at the timing when data patterns are matched with each other. The optical filter 16c is an optical band rejection filter which rejects the modulation signal light, and cuts off all components except an optical component of the modulated light from the multiplexed light, thereby producing the phase-modulated modulated light.

As can be seen from the above sequence, at a subsequent stage of the nonlinear mediums 15-1 and 15-2, the optical interference part 16 is disposed to perform the phase shift, the multiplexing, and the optical filtering. These processings permit output light from the nonlinear mediums 15-1 and 15-2 to appropriately interfere with each other, and light with a desired characteristic to be produced.

Here, when a data level of the modulation signal light is equal to "1", the phase modulation amount of one light passing through the nonlinear medium 15-1 is equal to "π", and the phase modulation amount of another light passing through the nonlinear medium 15-2 is equal to "-π". Therefore, a synthesized phase modulation amount in its light electric field is equal to "π".

On the other hand, when a data level of the modulation signal light is equal to "0", the phase modulation amount of one light passing through the nonlinear medium 15-1 is equal to "0", and the phase modulation amount of another light passing through the nonlinear mediums 15-2 is equal to "0". Therefore, a synthesized phase modulation amount in its light electric field is equal to "0".

That is, the optical modulation device 10a has a configuration in which the vector sum of one light passing through the route on which the nonlinear medium 15-1 is positioned and another light passing through the route on which the nonlinear medium 15-2 is positioned is always formed on the real axis, and the phase is equal to only "0" or "π". Accordingly, the optical modulation device 10a has a configuration in which the phase modulation amount does not vary in time and therefore the frequency chirp can be prevented from occurring.

Further, the optical modulation device 10a has the entire optical configuration. Since the phase modulation is performed by using the nonlinear optical effect in the nonlinear mediums 15-1 and 15-2, an electric drive signal for performing the phase modulation as in the LN optical modulator need not be used. As a result, the optical modulation device 10a is not limited to the operation speed of an electric circuit of a driving source, and the ultra-high-speed optical modulation can be realized.

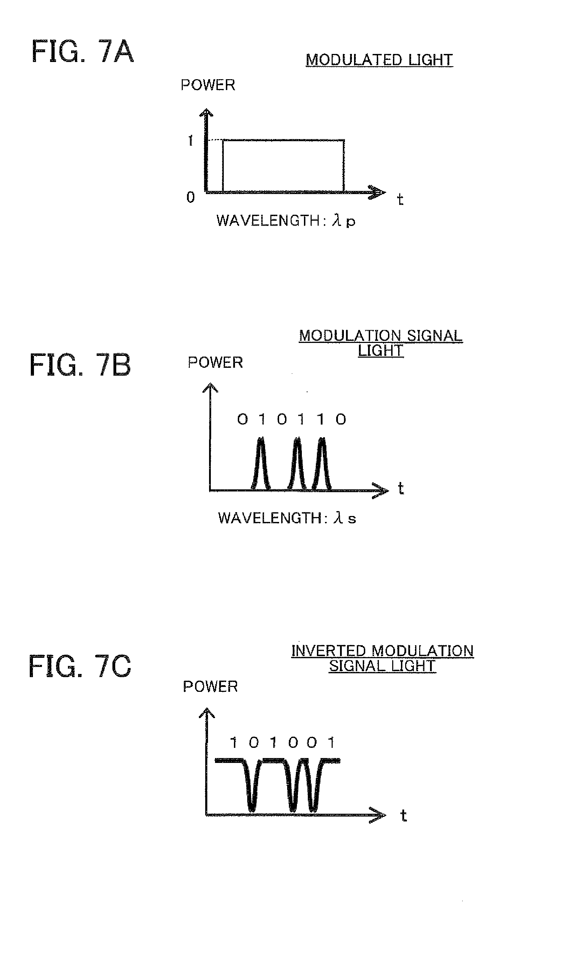

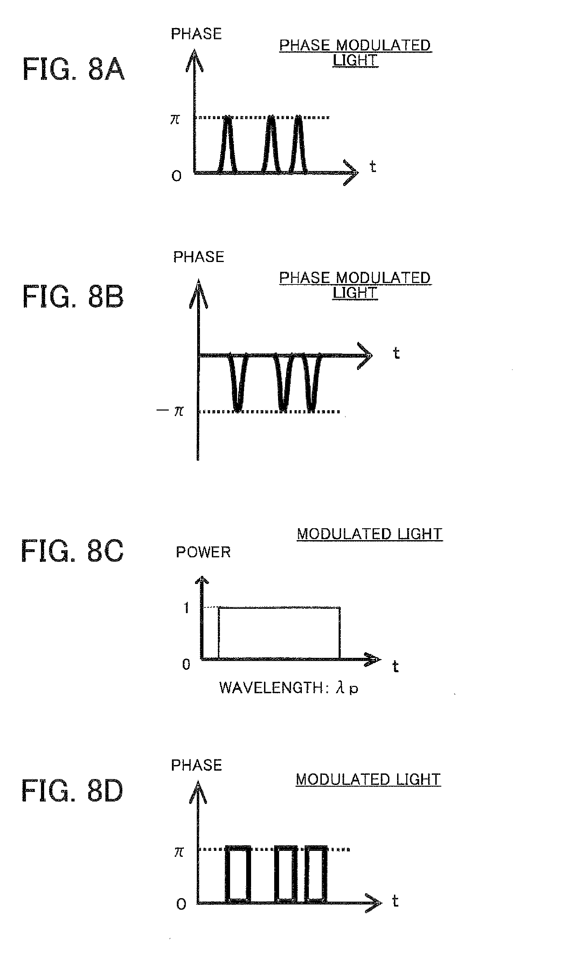

FIGS. 7A to 7C, and FIGS. 8A to 8D illustrate power or phase state of each signal light. FIGS. 7A to 7C, and FIGS. 8A to 8D illustrate one example of power or phase state of each signal light in the optical modulation device 10a. In FIG. 7A, the vertical axis represents the power, the horizontal axis represents the time, and the power of the modulated light is illustrated. The modulated light is continuous wave light.

In FIG. 7B, the vertical axis represents the power, the horizontal axis represents the time, and a data pattern of the input modulation signal light is illustrated. In FIG. 7C, the vertical axis represents the power, the horizontal axis represents the time, and a data pattern of the inverted modulation signal light b3 in which the data pattern of the modulation signal light is inverted is illustrated.

In FIG. 8A, the vertical axis represents the phase, the horizontal axis represents the time, and a phase of the phase modulated light c1 is illustrated. In FIG. 8B, the vertical axis represents the phase, the horizontal axis represents the time, and a phase of the phase modulated light c2 is illustrated. In FIG. 8C, the vertical axis represents the power, the horizontal axis represents the time, and power of the modulated light produced from the optical filter 16c is illustrated. In FIG. 8D, the vertical axis represents the phase, the horizontal axis represents the time, and a phase of the modulated light produced from the optical filter 16c is illustrated.

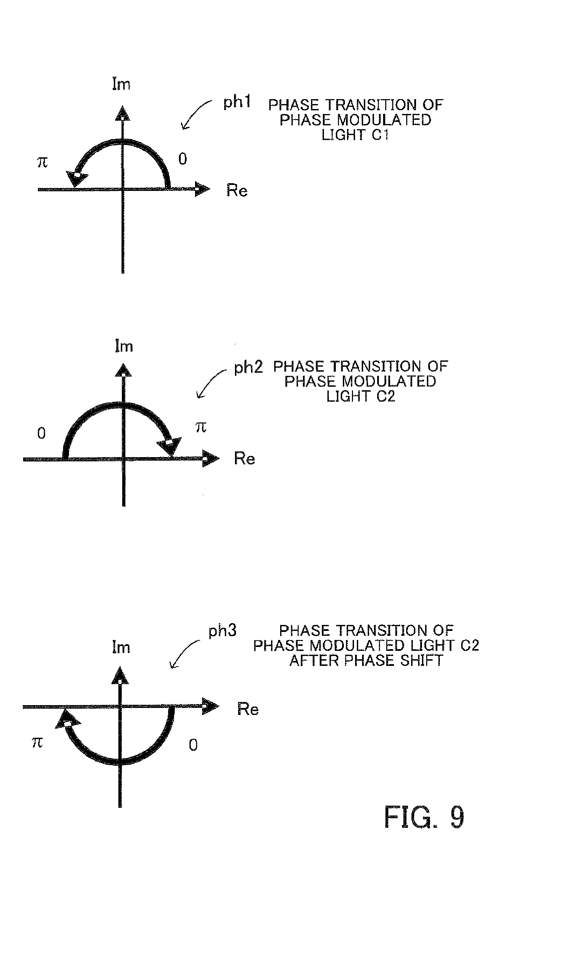

FIG. 9 illustrates the phase transition state in each route point of the optical modulation device 10a. A state ph1 illustrates the phase transition state from "0" to "n" of the phase modulated light c1 output from the nonlinear medium 15-1.

A state ph2 illustrates the phase transition state from "0·· to "$\pi$" of the phase modulated light c2 output from the nonlinear medium 15-2. A state ph3 illustrates the phase transition state of the phase modulated light c2 in which a phase is $\pi$ (or, -$\pi$)-shifted by the phase shift part 16a.

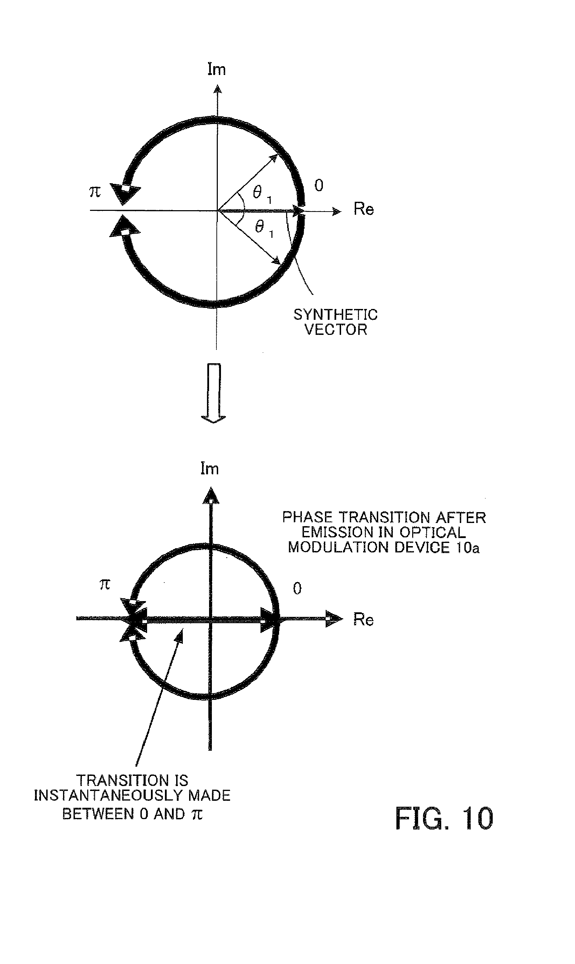

FIG. 10 illustrates the phase transition state of output light from the optical modulation device 10a. Since the phase modulated light c2 is phase-shifted by n (or, -$\pi$), the phase modulated lights c1 and c2 each have the same phase modulation amount, and the only signs are different from each other.

Accordingly, for example, when a phase of the phase modulated light c1 is transited by an angle (+$\theta_1$), a phase of the phase modulated light c2 after the phase shift is transited by an angle (-$\theta_1$). Since $|+\theta_1|=|-\theta_1|$ when the phase modulated lights c1 and c2 are multiplexed by the optical multiplexing part 16b, the synthetic vector is formed on the real axis.

Accordingly, since the synthetic vector in a light electric field is always formed on the real axis, when a phase is transited from "0" to "$\pi$" or from "$\pi$" to "0", an angle (phase) between "0" and "$\pi$" does not vary in time (since transited on the real axis, a phase has no angle), and a phase is instantaneously transited.

As can be seen from the above sequence, when the optical modulation device 10a performs the above-described phase modulation, since the time fluctuation of the phase modulation amount is suppressed, the frequency chirp is prevented from occurring in the same manner as in the LN optical modulator.

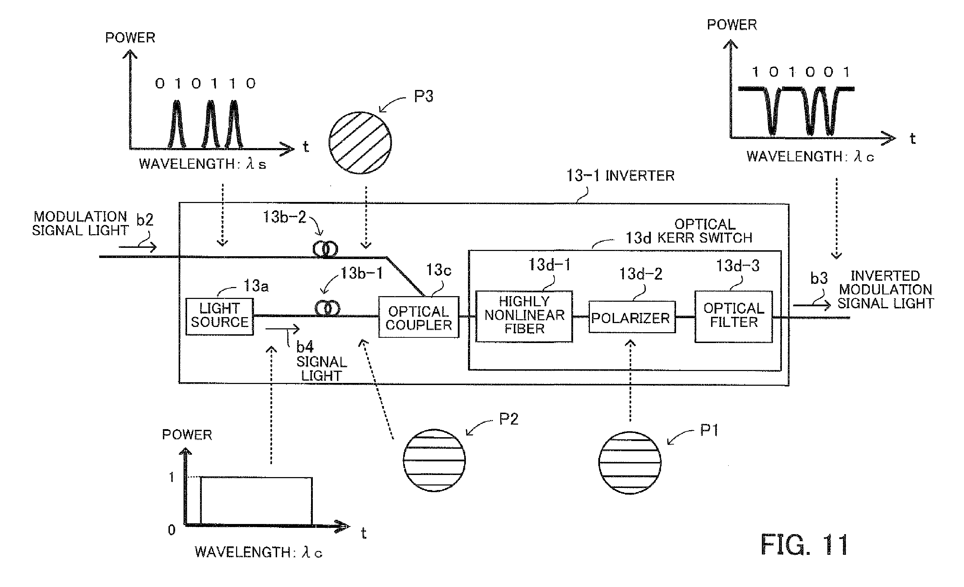

Next, a configuration and operation of the inverter 13 will be described. FIG. 11 illustrates a configuration example of the inverter. The inverter 13-1 inverts optical data by using an optical Kerr switch, and includes a light source 13a, polarization controllers 13b-1 and 13b-2, an optical coupler 13c, and an optical Kerr switch 13d. Further, the optical Kerr switch 13d includes a highly nonlinear fiber (for example, HALF) 13d-1, a polarizer 13d-2, and an optical filter 13d-3.

The light source 13a emits a signal light b4 as continuous wave light. A wavelength Ac of the signal light b4 is different from a wavelength $\lambda$s of the modulation signal light and a wavelength $\lambda$p of the modulated light ($\lambda$c$\lambda$s$\lambda$p). The polarization controller 13b-1 adjusts and controls a polarization state of the signal light b4. The polarization controller 13b-2 adjusts and controls a polarization state of the modulation signal light b2.

The optical coupler 13c multiplexes the modulation signal light b2 after the polarization adjustment and the signal light b4 after the polarization adjustment, and supplies the multiplexed light to the highly nonlinear fiber 13d-1. The highly nonlinear fiber 13d-1 modulates the polarization state of the signal light b4 by using the optical Kerr effect.

The polarizer 13d-2 is an optical element which passes light in the polarization state in the same direction with a polarization axis (transmission axis). The optical filter 13d-3 filters output light from the polarizer 13d-2 by using the wavelength $\lambda$c as a transmission band, and produces the inverted modulation signal light b3 as an inverted data signal light.

Operations will be described. When the modulation signal light b2 is not supplied, in other words, when the signal light b4 does not receive the nonlinear optical effect in the highly nonlinear fiber 13d-1, the polarization controller 13b-1 adjusts the polarization state of the signal light b4 such that the signal light b4 is transmitted at a maximum through the polarizer 13d-2 installed at a subsequent stage of the highly nonlinear fiber 13d-1.

Accordingly, the polarization controller 13b-1 adjusts the polarization state of the signal light b4 in the same direction with a polarization axis of the polarizer 13d-2. As illustrated in FIG. 11, for example, in the case of a state P1 in which the polarization axis of the polarizer 13d-2 is horizontal, the polarization controller 13b-1 adjusts and controls (state P2) the polarization state of the signal light b4 such that the polarization direction of the signal light b4 is also horizontal. In addition, the polarization controller 13b-1 adjusts and controls the polarization state of the signal light b4 at an input end of the highly nonlinear fiber 13d-1 so as to become approximately linearly polarized.

When the polarization state is not changed in the highly nonlinear fiber 13d-1, the above-described setting can be attained by using one polarization controller 13b-1. Further, when a polarization fluctuation occurring in the highly nonlinear fiber 13d-1 is considered, the polarization controller may be installed separately between the highly nonlinear fiber 13d-1 and the polarizer 13d-2.

On the other hand, the polarization controller 13b-2 adjusts and controls the polarization state of the modulation signal light b2 at an input end of the highly nonlinear fiber 13d-1 so as to become approximately linearly polarized and have an angle of approximately $\pi$/4 with respect to a polarization plane of the signal light b4 (state P3).

Here, when the modulation signal light b2 is not supplied and power is equal to "0", the polarization direction of the signal light b4 is prevented from being rotated in the highly nonlinear fiber 13d-1. In this case, the polarization direction of the signal light b4 output from the highly nonlinear fiber 13d-1 is matched with the polarization axis of the polarizer 13d-2 and therefore, approximately 100% of the signal light b4 passes through the polarizer 13d-2. Accordingly, when data of the modulation signal light b2 is equal to "0", a value of "1" is output from the polarizer 13d-2.

On the other hand, the modulation signal light b2 is supplied to the highly nonlinear fiber 13d-1, and power of the modulation signal light b2 becomes large. In this case, in the highly nonlinear fiber 13d-1, the polarization rotation is caused by the optical Kerr effect (particularly, by an action of XPM) and the polarization direction of the signal light b4 rotates according to power of the modulation signal light b2.

Further, when the polarization direction of the signal light b4 rotates by π/2, the polarization direction of the signal light b4 output from the highly nonlinear fiber 13d-1 becomes perpendicular to the polarization axis of the polarizer 13d-2. As a result, the signal light b4 is completely cut off by the polarizer 13d-2. Accordingly, when data of the modulation signal light b2 is equal to "1", a value of "0" is output from the polarizer 13d-2.

As can be seen from the above sequence, the inverter 13-1 has a configuration in which a data level of the modulation signal light b2 generates the inverted modulation signal light b3 by the optical Kerr switch 13d using the highly nonlinear fiber 13d-1 as a nonlinear medium. As a result, the data inversion can be efficiently performed still in a state of an optical signal without performing the photoelectric conversion.

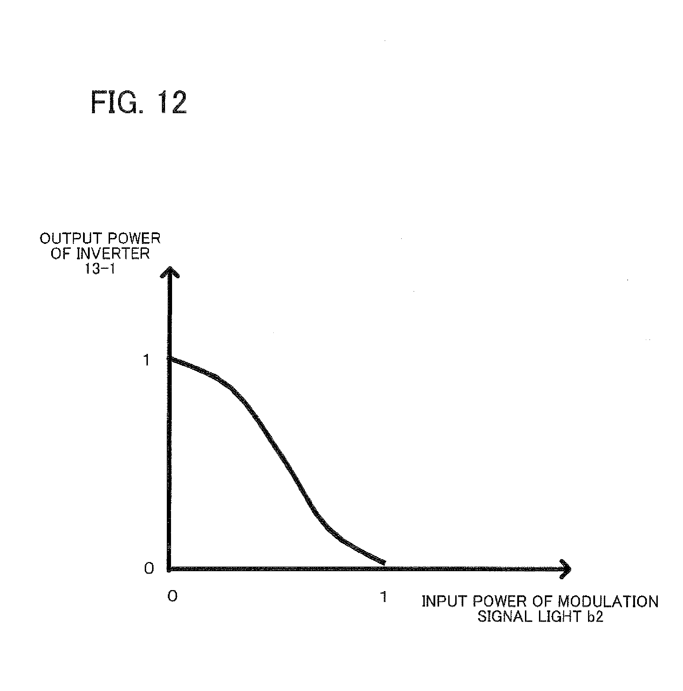

FIG. 12 illustrates input-output characteristics of the inverter 13-1. The vertical axis represents the output power of the inverter 13-1, and the horizontal axis represents the input power of the modulation signal light b2. When the input power of the modulation signal light b2 is equal to "0", the output power of the inverter 13-1 is equal to "1", whereas when the input power of the modulation signal light b2 is equal to "I", the output power of the inverter 13-1 is equal to "0".

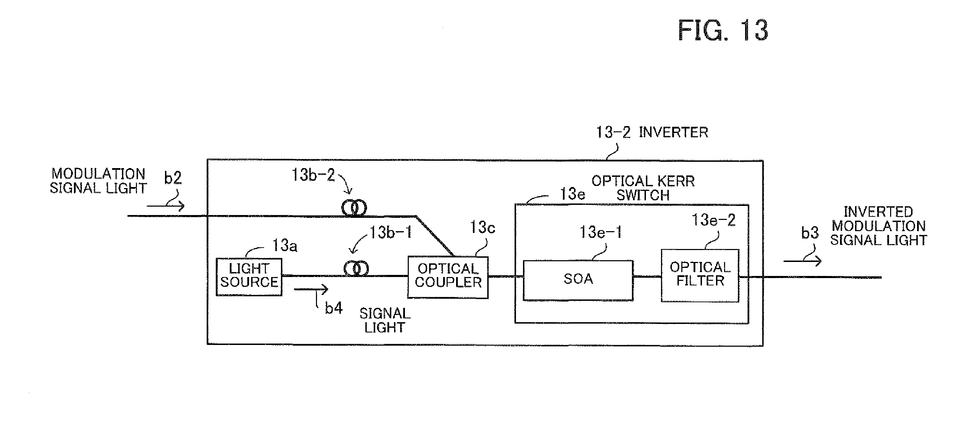

FIG. 13 illustrates a configuration example of the inverter. In the illustrated inverter 13-2, a semiconductor optical amplifier (SOA) is used in place of the highly nonlinear fiber 13d-1 and polarizer 13d-2 illustrated in FIG. 11.

The inverter 13-2 includes the light source 13a, the polarization controllers 13b-1 and 13b-2, the optical coupler 13c, and an optical Kerr switch 13e. Further, the optical Kerr switch 13e includes an SOA 13e-1 and an optical filter 13e-2. To the SOA 13e-1, the multiplexed light of the modulation signal light b2 and the signal light b4 is supplied.

Note that when an SOA operating without depending on a polarized wave such as a rectangular non-strained bulk structure, a tensile-strained multi-quantum well (MQW) structure, a tensile-strained bulk structure, and a tensile-strained barrier MQW structure is used as the SOA 13e-1, the polarization controllers 13b-1 and 13b-2 need not be used.

Here, when the sum of the power of the modulation signal light b2 and the signal light b4 is sufficiently small, namely, the gain is linear, both of the lights receive the same gain. However, when the power of the modulation signal light b2 is sufficiently larger than that of the signal light b4, energy used for amplifying the modulation signal light b2 becomes large, and as a result, the signal light b4 fails to receive the gain.

Specifically, the following phenomenon occurs. That is, when the power of the modulation signal light b2 becomes large, a cross-gain modulation as the nonlinear optical effect occurs in the SOA 13e-1. Even if the signal light b4 is supplied to the SOA 13e-1 with a constant power, a gain generated in the SOA 13e-1 is taken by the modulation signal light b2, and as a result, an output power from the signal light b4 becomes small. The above-described fact means that when data of the modulation signal light b2 is equal to "1", a value of "0" is output from the SOA 13e-1.

On the other hand, when the modulation signal light b2 is not supplied, the signal light b4 be obtained the gain. The above-described fact means that when data of the modulation signal light b2 is equal to "0", a value of "1" is output from the SOA 13e-1. As described above, light in which a data level of the modulation signal light b2 is inverted is output from the SOA 13e-1, thereby performing the data inversion.

As can be seen from the above sequence, the inverter 13-2 has a configuration in which the inverted modulation signal light b3 obtained by inverting a data level of the modulation signal light b2 is generated by the optical Kerr switch 13e using the SOA 13e-1 as a nonlinear medium. As a result, the data inversion can be efficiently performed still in a state of an optical signal without performing the photoelectric conversion.

Next, other embodiments of the optical modulation device 10a will be described. In a subsequent description, the same reference numerals are given to the above-described circuit components, and the description of the same circuit components will not be repeated here. New circuit components will be mainly described.

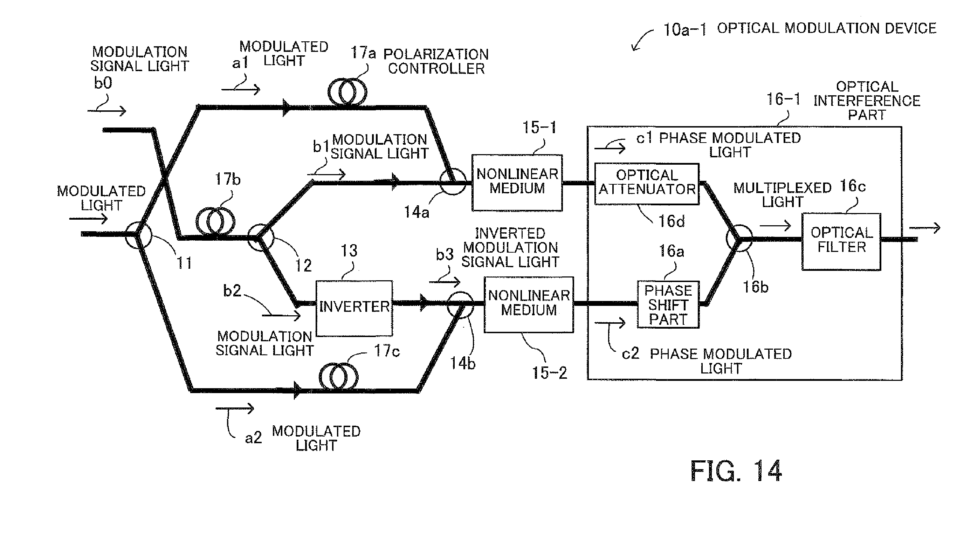

FIG. 14 illustrates a configuration example of the optical modulation device. In the illustrated optical modulation device 10a-1, polarization controllers 17a to 17c are newly provided, and a new optical interference part 16-1 is provided on the optical modulation device 10a described above in FIG. 6. The optical interference part 16-1 newly includes an optical attenuator 16d.

The polarization controller 17a adjusts and controls a polarization state of the modulated light a1. The polarization controller 17b adjusts and controls a polarization state of a modulation signal light b0. The polarization controller 17c adjusts and controls a polarization state of the modulated light a2. The optical attenuator 16d adjusts and controls a light level of the phase modulated light c1.

In general, the polarization state of light is not completely kept in the nonlinear mediums or optical fibers for connecting optical components. For this purpose, when the polarization controllers 17a to 17c are provided, a desired polarization state can be realized.

One light loss through a route during passing through the nonlinear medium 15-1 and another light loss through a route during passing through the nonlinear medium 15-2 are not generally equivalent to each other. For the above-described purpose, the optical attenuator 16d serving as a power adjusting mechanism is installed on a route during passing through the nonlinear medium 15-1.

This makes it possible to equalize power of the phase modulated light c1 and that of the phase modulated light c2 after the phase shift, and multiplex both of the power-balanced phase modulated light c1 and phase modulated light c2 by the optical multiplexing part 16b.

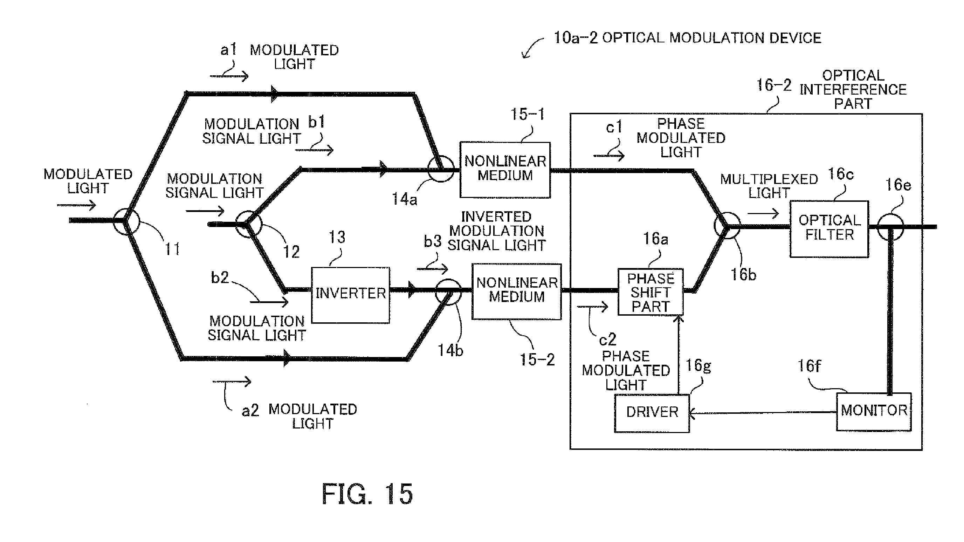

FIG. 15 illustrates a configuration example of the optical modulation device. In the illustrated optical modulation device 10a-2, a new optical interference part 16-2 is provided on the optical modulation device 10a described above in FIG. 6. The optical interference part 16-2 newly includes an optical splitter 16e, a monitor 16f, and a driver 16g.

The optical splitter 16e splites the modulated light output from the optical filter 16c into two lights. The monitor 16f monitors one power of the modulated light split by the optical splitter 16e. The driver 16g adjusts the bias amount with respect to the phase shift part 16a and performs a feedback control which gives a bias after the adjustment to the phase shift part 16a, such that a monitor value is a predetermined value (concretely, such that monitored light power is maximized).

Here, when multiplexing lights passing through respective routes of the nonlinear mediums 15-1 and 15-2, a fluctuation of the route difference need be set to a length sufficiently smaller than a wavelength. Since being approximately 1.5 $\mu$m, a wavelength of light used in the optical communication is suppressed to the accuracy of sub-micrometer.

When the optical modulation device is integrated by using silicon waveguides, a dynamic stabilization need not be particularly performed. However, when optical components of optical fiber input and output modes are connected to realize this optical modulation device, the fluctuation of the route difference is preferably controlled to stabilize operations.

As an example of this stabilization method, a configuration of the optical modulation device 10a-2 is illustrated. When the route difference is an odd-number times of half-wavelength, light interferes with each other and output power becomes small. On the other hand, when the route difference is an even-number times of half-wavelength, light interferes with each other and output power becomes large.

By using the above-described characteristic, the optical modulation device 10a-2 measures the output light power from the optical filter 16c by the monitor 16f such as a light power meter. Further, the optical modulation device 10a-2 adjusts a bias by the driver 16g so as to maximize the output light power. These processings permit the fluctuation of the route difference to be efficiently controlled, and a stable operation to be performed.

In addition, examples for realizing the bias control include a method for applying a DC bias to an LN waveguide or silicon waveguide. Or, there may be used a method for actuating tension on the optical fiber and adjusting a length of the optical fiber with high accuracy (for example, a method for adding a piezo element to the optical fiber, applying a voltage to the piezo element by using the driver 16g, and finely adjusting a route length of the optical fiber).

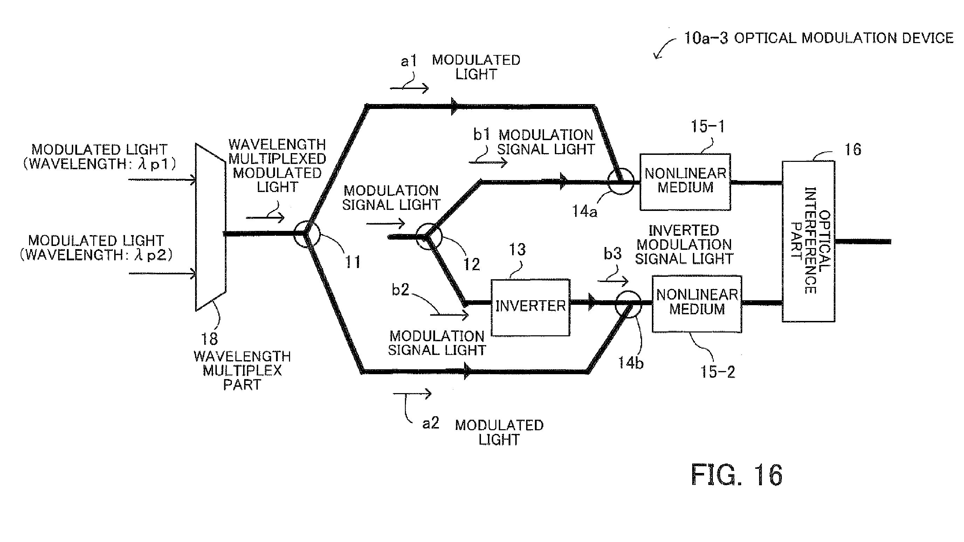

FIG. 16 illustrates a configuration example of the optical modulation device. In the illustrated optical modulation device 10a-3, a wavelength multiplex part 18 is newly provided on the optical modulation device 10a described above in FIG. 6. The wavelength multiplex part 18 performs wavelength multiplexing between one modulated light with a wavelength $\lambda$p1 and another modulated light with a wavelength $\lambda$p2 ($\lambda$p1$\neq$$\lambda$p2), and outputs a wavelength multiplexed modulated light.

As can be seen from the above sequence, there is provided the wavelength multiplex part 18 which performs wavelength multiplexing of modulated lights having a plurality of wavelengths different from each other such that the modulated lights phase-modulated in the nonlinear mediums 15-1 and 15-2 become a wavelength multiplexed light having the number of wavelengths more than or equal to two wavelengths.

This makes it possible to modulate the modulated lights with a plurality of wavelengths by using the same modulation signal light and perform a communication service such as multicast. In addition, in an example of FIG. 16, a case of using the modulated lights with two wavelengths is illustrated, and also the modulated lights having a plurality of wavelengths more than or equal to three wavelengths can be used.

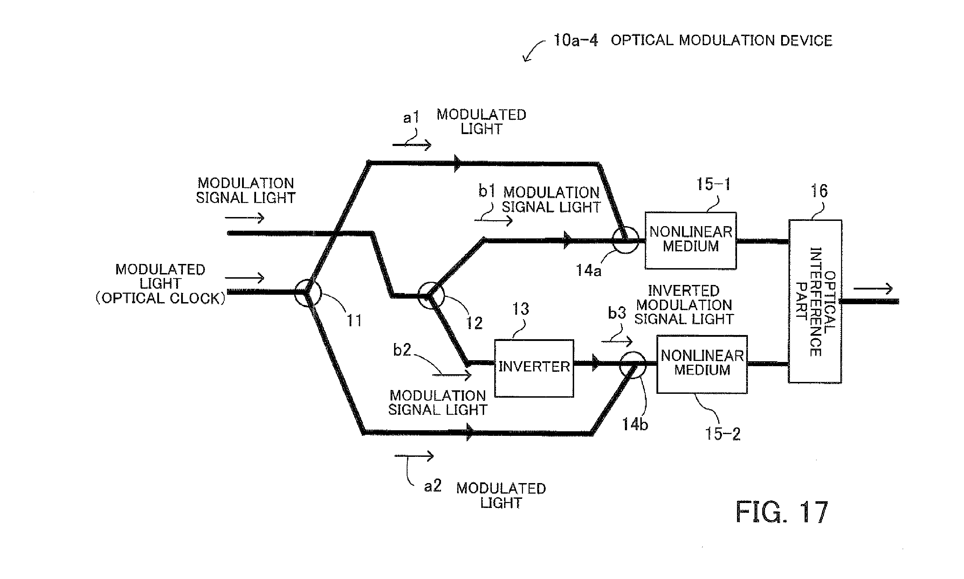

FIG. 17 illustrates a configuration example of the optical modulation device. To the above-described optical modulation devices, CW light is supplied as the modulated light; however, to the optical modulation device 10a-4, the modulated light with an optical clock is supplied (a configuration of the device is not particularly changed).

When the CW light is supplied as the modulated light, an NRZ (Non Return to Zero) type signal light is produced after the phase modulation. Further, when an RZ (Return to Zero) type signal light is produced, the pulsed modulated light may be supplied as in the optical modulation device 10a-4.

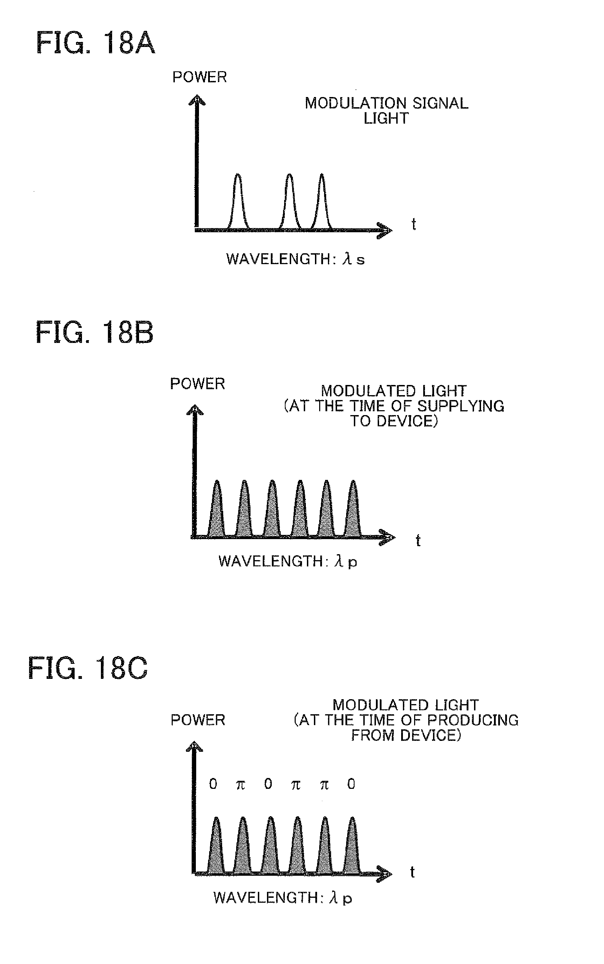

FIGS. 18A to 18C illustrate a waveform example of each signal light. FIGS. 18A to 18C illustrate a waveform example of each signal light of the optical modulation device 10a-4. In FIG. 18A, the vertical axis represents the power, the horizontal axis represents the time, and a waveform of the modulation signal light is illustrated. In FIG. 18B, the vertical axis represents the power, the horizontal axis represents the time, and a waveform of the modulated light (at the time of supplying to the device) is illustrated. In FIG. 18C, the vertical axis represents the power, the horizontal axis represents the time, and a waveform of the modulated light (at the time of producing from the device) is illustrated.

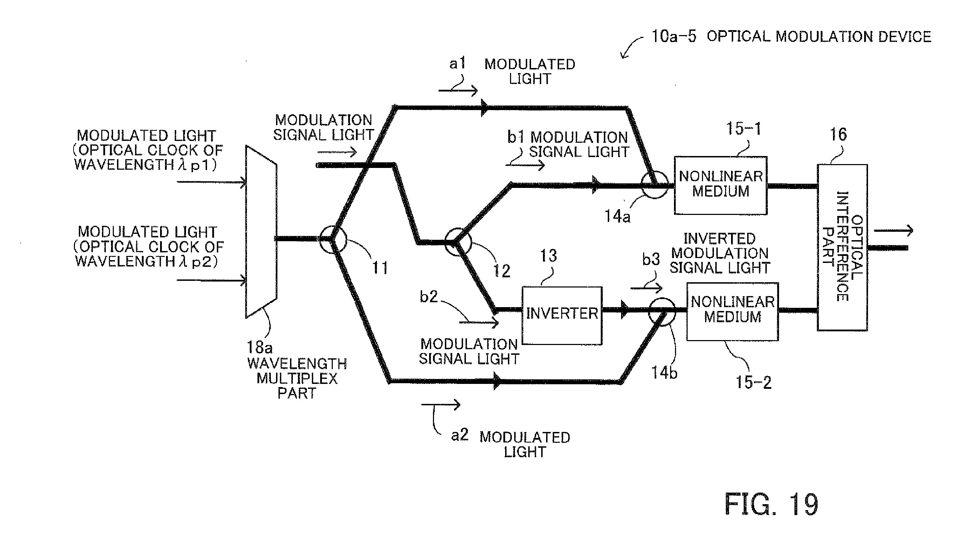

FIG. 19 illustrates a configuration example of the optical modulation device. In the illustrated optical modulation device 10a-5, a wavelength multiplex part 18a is newly provided on the optical modulation device 10a described above in FIG. 6. The wavelength multiplex part 18a performs wavelength multiplexing between one modulated light with the wavelength λp1 and another modulated light with the wavelength λp2 (λp1≠λp2), and outputs the wavelength multiplexed modulated light. Both of the one modulated light (λp1) and the another modulated light (λp2) have optical clocks.

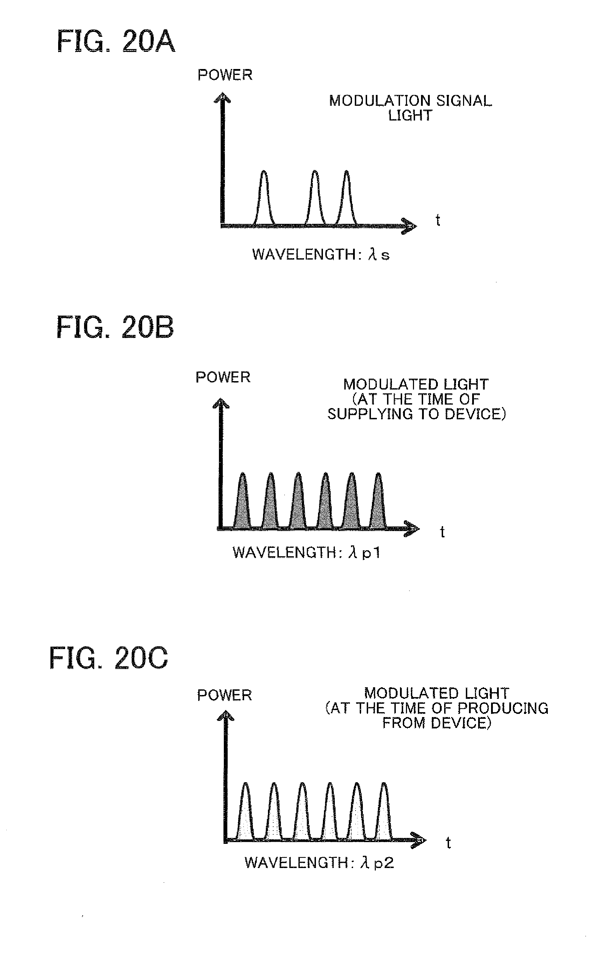

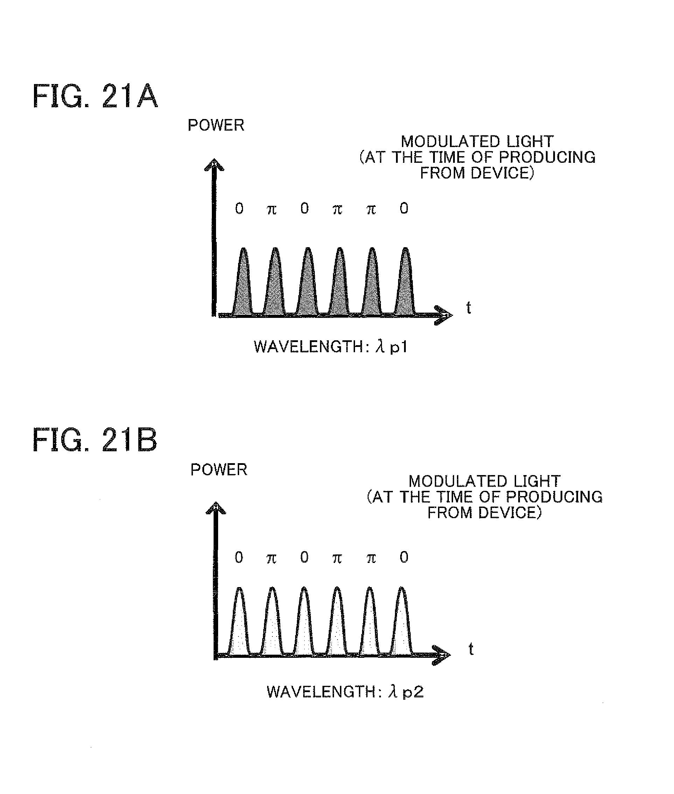

FIGS. 20A to 20C, and FIGS. 21A and 21B illustrate a waveform example of each signal light. FIGS. 20A to 20C, and FIGS. 21A and 21B illustrate a waveform example of each signal light of the optical modulation device 10a-5. In FIG. 20A, the vertical axis represents the power, the horizontal axis represents the time, and a waveform of the modulation signal light is illustrated. In FIG. 20B, the vertical axis represents the power, the horizontal axis represents the time, and a waveform of the modulated light (at the time of supplying to the device, a wavelength: λp1) is illustrated. In FIG. 20C, the vertical axis represents the power, the horizontal axis represents the time, and a waveform of the modulated light (at the time of supplying to the device, a wavelength: λp2) is illustrated.

In FIG. 21A, the vertical axis represents the power, the horizontal axis represents the time, and a waveform of the modulated light (at the time of producing from the device, a wavelength: λp1) is illustrated. In FIG. 21B, the vertical axis represents the power, the horizontal axis represents the time, and a waveform of the modulated light (at the time of producing from the device, a wavelength: λp2) is illustrated.

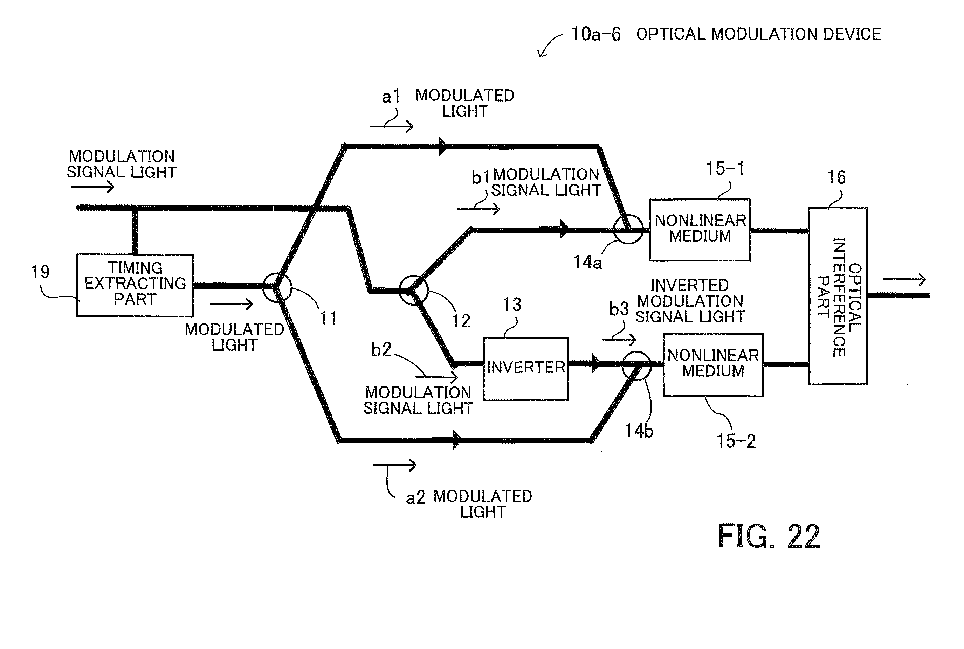

FIG. 22 illustrates a configuration example of the optical modulation device. In the illustrated optical modulation device 10a-6, a timing extracting part 19 is newly provided on the optical modulation device 10a described above in FIG. 6. A waveform of each signal light is the same as that of FIG. 18.

The timing extracting part 19 performs timing extraction from an optical clock of the modulation signal light, and generates an optical clock of the modulated light. When the modulated light with an optical clock is supplied, the synchronization with the modulation signal light is important.

For this purpose, for realizing the accurate synchronization, the timing extracting part 19 extracts a clock timing from the modulation signal light, and generates the modulated light with an optical clock matched with the above-described clock timing. When including the timing extracting part 19, the optical modulation device 10a-6 can generate the modulated light with an optical clock in accurate synchronization with that of the modulation signal light.

In addition, examples of the timing extracting method include a method in which an electric absorption modulator (EAM) is used, and a method in which a semiconductor optical amplifier is used. Further, the generation of an ultra-high-speed optical clock can be realized by a semiconductor mode-locked laser and a fiber mode-locked laser.

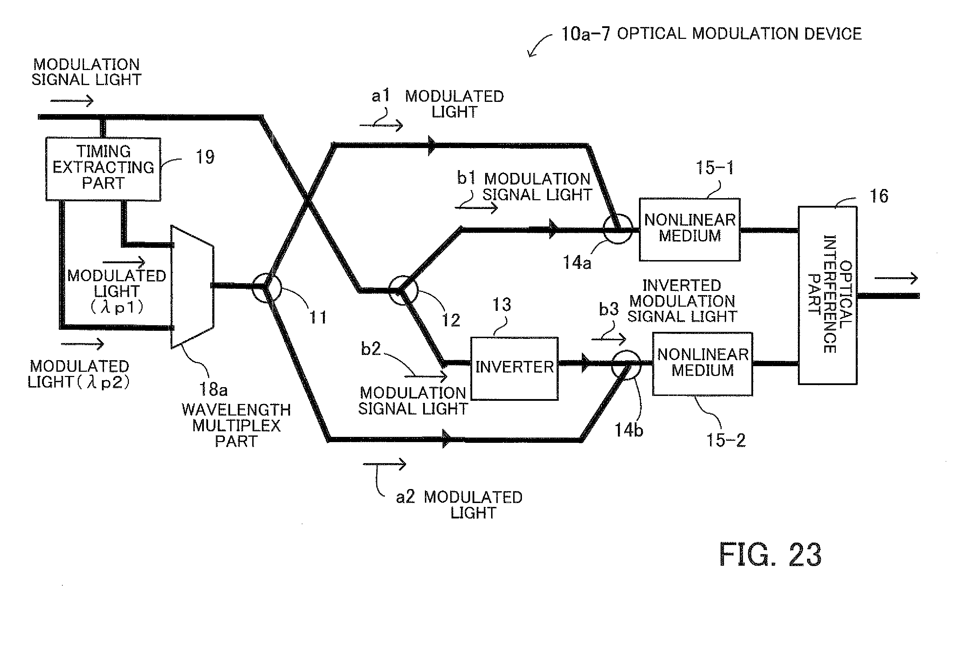

FIG. 23 illustrates a configuration example of the optical modulation device. In the illustrated optical modulation device 10a-7, the wavelength multiplex part 18a and the timing extracting part 19 are newly provided on the optical modulation device 10a described above in FIG. 6. A waveform of each signal light is the same as those of FIGS. 20 and 21.

The timing extracting part 19 performs clock timing extraction of the modulation signal light, and generates an optical clock of the modulated light with a wavelength λp1 and that of the modulated light with a wavelength λp2 (λp1≠λp2). The wavelength multiplex part 18a performs wavelength multiplexing between the modulated light with a wavelength λp1 and the modulated light with a wavelength λp2, and outputs a wavelength multiplexed modulated light.

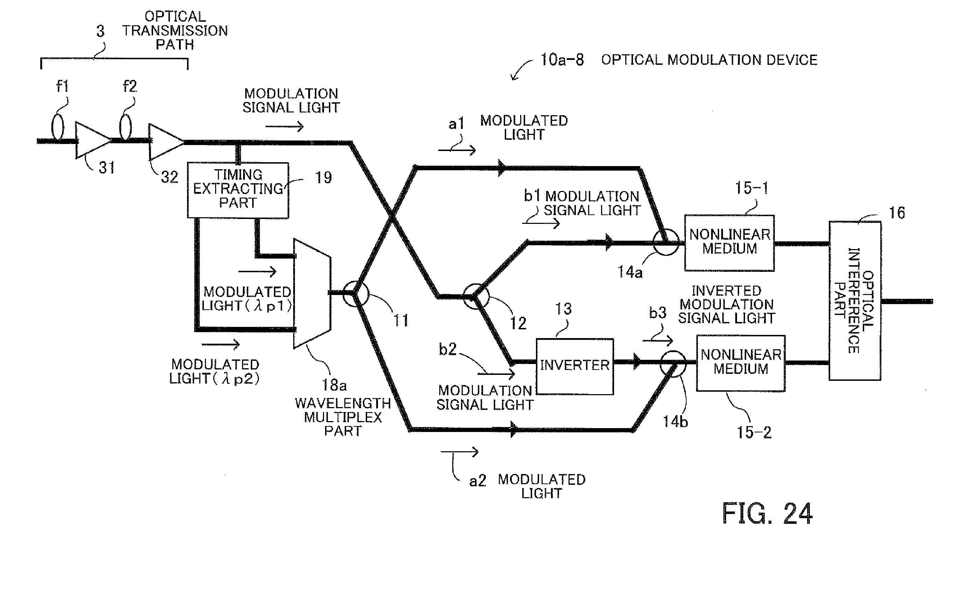

FIG. 24 illustrates a configuration example of the optical modulation device. The optical modulation device 10a-8 has the same basic configuration as that of the optical modulation device 10a-7 of FIG. 23, and has a configuration in which the modulation signal light transmitted through an optical transmission path 3 is received. A waveform of each signal light is the same as those of FIGS. 20 and 21.

The optical transmission path 3 includes optical fibers f1 and f2, and optical amplifiers 31 and 32 are installed at relay points of the optical transmission path 3. The optical modulation device 10a-8 receives the modulation signal light transmitted from another node through the optical transmission path 3, and performs timing extraction from the modulation signal light, thereby generating a plurality of modulated lights each having a wavelength different from each other.

By the above-described configuration, for example, even if the modulation signal light transmitted from a distant node is received, the timing extracting part 19 extracts clock timing from the modulation signal light, thereby generating an optical clock of the modulated light in synchronization with the modulation signal light.

As can be seen from various embodiments discussed above, the proposed optical modulation device and method make it possible to perform high-quality optical phase modulation with high-speed response, in which degradation in transmission characteristic is suppressed.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that various changes, substitutions and alterations could be made hereto without departing from the spirit and scope of the invention.

**Claims**

1.  An optical modulation device comprising:

    an inverter which inverts power of a modulation signal light to generate the inverted modulation signal light;
    a first nonlinear medium which phase-modulates a modulated light by a nonlinear optical effect of the modulation signal light;
    a second nonlinear medium which phase-modulates the modulated light by the nonlinear optical effect of the inverted modulation signal light; and
    an optical interference part which controls interference between output light from the first nonlinear medium and that from the second nonlinear medium.

2.  The optical modulation device according to claim 1, wherein:

    the optical interference part includes:

       a phase shift part which gives a predetermined phase shift to the output light from the second nonlinear medium;
       an optical multiplex part which multiplexes the output light from the first nonlinear medium and that from the second nonlinear medium after the phase shift and outputs the multiplexed light; and
       an optical filter which cuts off, from the multiplexed light, light having a wavelength different from that of the modulated light.

3.  The optical modulation device according to claim 2, wherein:

    the optical interference part further includes an optical attenuator; and
    the optical attenuator equalizes power of the output light from the first nonlinear medium and that from the second nonlinear medium after the phase shift by performing attenuation control of either one of the power of the output light from the first nonlinear medium and that from the second nonlinear medium after the phase shift.

4.  The optical modulation device according to claim 2, wherein:

    the optical interference part includes:

    a monitor which monitors light power after transmission through the optical filter; and
    a driver which adjusts a bias amount to make a phase shift such that a monitor value is a predetermined value, and gives the bias amount after the adjustment to the phase shift part.

5.  The optical modulation device according to claim 1, further comprising a polarization controller which controls a polarization state with respect to the modulation signal light and the modulated light.

6.  The optical modulation device according to claim 1, further comprising a wavelength multiplex part which performs waveform multiplexing of the modulated lights having a plurality of wavelengths different from each other such that the modulated lights phase-modulated in the first and second nonlinear mediums are a wavelength multiplexed light having two or more wavelengths.

7.  The optical modulation device according to claim 1, wherein the inverter includes an optical Kerr switch using a highly nonlinear fiber as a nonlinear medium.

8.  The optical modulation device according to claim 1, wherein the inverter includes an optical Kerr switch using a semiconductor optical amplifier as a nonlinear medium.

9.  The optical modulation device according to claim 1, further comprising a timing extracting part which extracts a clock timing from the modulation signal light and generates an optical clock of the modulated light synchronized with the modulation signal light.

10. An optical modulation method comprising:

    inverting power of a modulation signal light to generate the inverted modulation signal light;
    causing a first nonlinear medium to phase-modulate a modulated light by a nonlinear optical effect of the modulation signal light;
    causing a second nonlinear medium to phase-modulate the modulated light by the nonlinear optical effect of the inverted modulation signal light; and
    controlling interference between output light from the first nonlinear medium and that from the second nonlinear medium.

# FIG. 1

10 OPTICAL MODULATION DEVICE

MODULATED LIGHT →

MODULATION SIGNAL LIGHT →

15-1

16

NONLINEAR MEDIUM →

OPTICAL INTERFERENCE PART →

MODULATION SIGNAL LIGHT →

13

INVERTER

INVERTED MODULATION SIGNAL LIGHT →

NONLINEAR MEDIUM →

MODULATED LIGHT →

15-2

POWER

MODULATION
SIGNAL LIGHT

52

5　LN OPTICAL
MODULATOR

FIG. 2

OPTO-
ELECTRIC
CONVERTER

54a

POWER

51-1　55a

Term.

Term.　VOLTAGE
SOURCE

MODULATED
LIGHT

51b

MODULATED
LIGHT

POWER

PHASE

51a

DATA
INVERTER

53

54b

55b

Term.

51d

51-2　51　51c

50

POWER

PHASE

FREQUENCY
CHIRP

POWER

FREQUENCY
CHIRP

MODULATED LIGHT AT
THE TIME OF INCIDENCE

MODULATED LIGHT AT
THE TIME OF EMISSION

EP 2 355 377 A1

# FIG. 3A

Im

PHASE TRANSITION IN
PARALLEL OPTICAL
WAVEGUIDE 51-1

$\pi$

$0$

$\theta$

Re

# FIG. 3B

Im

PHASE TRANSITION IN
PARALLEL OPTICAL
WAVEGUIDE 51-2

$\theta$

Re

$\pi$

$0$

# FIG. 4

SYNTHETIC VECTOR

PHASE TRANSITION AFTER EMISSION IN LN OPTICAL MODULATOR 5

TRANSITION IS INSTANTANEOUSLY MADE BETWEEN 0 AND $\pi$

FIG. 5

OPTICAL DIRECT PHASE MODULATION SYSTEM

MODULATED LIGHT AT THE TIME OF INCIDENCE

MODULATED LIGHT AT THE TIME OF EMISSION

EP 2 355 377 A1

FIG. 6

# FIG. 7A

MODULATED LIGHT

POWER

WAVELENGTH: $\lambda$ p

# FIG. 7B

MODULATION SIGNAL LIGHT

POWER

0 1 0 1 1 0

WAVELENGTH: $\lambda$ s

# FIG. 7C

INVERTED MODULATION SIGNAL LIGHT

POWER

1 0 1 0 0 1

FIG. 8A

PHASE

PHASE MODULATED LIGHT

$\pi$

O

t

FIG. 8B

PHASE

PHASE MODULATED LIGHT

t

$-\pi$

FIG. 8C

MODULATED LIGHT

POWER

1

0

t

WAVELENGTH: $\lambda_p$

FIG. 8D

PHASE

MODULATED LIGHT

$\pi$

0

t

Im

ph1 PHASE TRANSITION OF
PHASE MODULATED
LIGHT C1

$\pi$ 0

Re

Im

ph2 PHASE TRANSITION OF
PHASE MODULATED
LIGHT C2

0 $\pi$

Re

Im

ph3 PHASE TRANSITION OF
PHASE MODULATED LIGHT C2
AFTER PHASE SHIFT

Re

$\pi$ 0

FIG. 9

SYNTHETIC
VECTOR

PHASE TRANSITION AFTER
EMISSION IN OPTICAL
MODULATION DEVICE 10a

TRANSITION IS
INSTANTANEOUSLY MADE
BETWEEN 0 AND π

# FIG. 10

FIG. 11

EP 2 355 377 A1

FIG. 12

OUTPUT POWER
OF INVERTER
13-1

1

0

0                                    1    INPUT POWER OF MODULATION
                                          SIGNAL LIGHT b2

FIG. 13

EP 2 355 377 A1

13-2 INVERTER

MODULATION SIGNAL LIGHT  b2

13b-2

OPTICAL KERR SWITCH

13e

LIGHT SOURCE  13a

13b-1

13c

13e-1

13e-2

INVERTED MODULATION SIGNAL LIGHT

b3

b4  SIGNAL LIGHT

OPTICAL COUPLER

SOA

OPTICAL FILTER

FIG. 14

EP 2 355 377 A1

FIG. 15

EP 2 355 377 A1

FIG. 16

FIG. 17

10a-4 OPTICAL MODULATION DEVICE

16 OPTICAL INTERFERENCE PART

15-1 NONLINEAR MEDIUM

15-2 NONLINEAR MEDIUM

INVERTED MODULATION SIGNAL LIGHT b3

14a

14b

b1 MODULATION SIGNAL LIGHT

a1 MODULATED LIGHT

13 INVERTER

12

11

b2 MODULATION SIGNAL LIGHT

a2 MODULATED LIGHT

MODULATION SIGNAL LIGHT

MODULATED LIGHT (OPTICAL CLOCK)

## FIG. 18A

POWER

MODULATION SIGNAL
LIGHT

t

WAVELENGTH: $\lambda$ s

## FIG. 18B

POWER

MODULATED LIGHT
(AT THE TIME OF SUPPLYING
TO DEVICE)

t

WAVELENGTH: $\lambda$ p

## FIG. 18C

POWER

MODULATED LIGHT
(AT THE TIME OF PRODUCING
FROM DEVICE)

0　π　0　π　π　0

t

WAVELENGTH: $\lambda$ p

FIG. 19

# FIG. 20A

POWER

MODULATION SIGNAL
LIGHT

t

WAVELENGTH: $\lambda s$

# FIG. 20B

POWER

MODULATED LIGHT
(AT THE TIME OF
SUPPLYING TO DEVICE)

t

WAVELENGTH: $\lambda p1$

# FIG. 20C

POWER

MODULATED LIGHT
(AT THE TIME OF PRODUCING
FROM DEVICE)

t

WAVELENGTH: $\lambda p2$

# FIG. 21A

POWER

MODULATED LIGHT
(AT THE TIME OF PRODUCING
FROM DEVICE)

0　π　0　π　π　0

t

WAVELENGTH: $\lambda$ p1

# FIG. 21B

POWER

MODULATED LIGHT
(AT THE TIME OF PRODUCING
FROM DEVICE)

0　π　0　π　π　0

t

WAVELENGTH: $\lambda$ p2

FIG. 22

10a-7 OPTICAL MODULATION DEVICE

MODULATION
SIGNAL LIGHT

a1 MODULATED
LIGHT

TIMING
EXTRACTING
PART

19

b1 MODULATION
SIGNAL LIGHT

15-1

16

NONLINEAR
MEDIUM

14a

OPTICAL
INTERFERENCE
PART

MODULATED
LIGHT
(λp1)

11

12

13

b3

INVERTED
MODULATION
SIGNAL LIGHT

NONLINEAR
MEDIUM

b2

INVERTER

MODULATED
LIGHT(λp2)

18a
WAVELENGTH
MULTIPLEX
PART

MODULATION
SIGNAL LIGHT

14b

15-2

a2 MODULATED
LIGHT

FIG. 23

FIG. 24

Europäisches
Patentamt

European
Patent Office

Office européen
des brevets

## EUROPEAN SEARCH REPORT

Application Number

EP 11 15 2365

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/196508 A1 (WEI HAIQING [US] ET AL) 26 December 2002 (2002-12-26) * paragraphs [0011] - [0013]; figure 3 * ----- | 1-10 | INV. H04B10/155 G02F1/225 G02F3/00 |
| A | EP 1 271 220 A1 (CORNING O T I S P A [IT] AVANEX CORP [US]) 2 January 2003 (2003-01-02) * paragraphs [0044] - [0058]; figure 6 * ----- | 1-10 | G02F1/35 |
| A | EP 2 058 690 A1 (HITACHI COMM TECH LTD [JP] HITACHI LTD [JP]) 13 May 2009 (2009-05-13) * paragraphs [0015] - [0026]; figures 6-9 * ----- | 1-10 | |

TECHNICAL FIELDS
SEARCHED      (IPC)

H04B
G02F

The present search report has been drawn up for all claims

| Place of search | Date of completion of the search | Examiner |
|---|---|---|
| Munich | 20 May 2011 | Kiernan, Laurence |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 15 2365

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2011

| Patent document cited in search report | | Publication date | Patent family member(s) | | Publication date |
|---|---|---|---|---|---|
| US 2002196508 | A1 | 26-12-2002 | NONE | | |
| EP 1271220 | A1 | 02-01-2003 | CN | 1432846 A | 30-07-2003 |
| | | | JP | 2003066394 A | 05-03-2003 |
| EP 2058690 | A1 | 13-05-2009 | CN | 101501554 A | 05-08-2009 |
| | | | WO | 2008026326 A1 | 06-03-2008 |
| | | | US | 2009324247 A1 | 31-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11194375 A

- JP 2001264712 A